# EUROPEAN PATENT APPLICATION

(11) **EP 2 930 671 A1**
(43) Date of publication of application: **14.10.2015**
(21) Application number: 14382139.5
(22) Date of filing: 11.04.2014
(51) Int. Cl.: G06Q 10/02, G06Q 50/00, G06T 19/00

(54) **Dynamically adapting a virtual venue**

(71) Applicant: Microsoft Technology Licensing, LLC, Redmond, WA 98052 (US)
(72) Inventor: Campos Fernández de Castro, Fernando Pedro, Redmond WA 98052-6399 (US); Serrano Castro, Jesús, Redmond WA 98052-6399 (US)
(74) Representative: Grünecker Patent- und Rechtsanwälte PartG mbB

(57) **Abstract**

A Virtual Venue System (VVS) is described which grants physical-attendee (PA) tickets and virtual-attendee (VA) tickets for an event that will be held in a physical venue. A PA ticket grants an actual attendee the right to physically attend the event in person. A VA ticket grants a virtual attendee the right to virtually attend the event from a remote location with respect to the physical venue. Each ticket, whether a PA ticket or a VA ticket, is associated with an actual position in the physical venue. The VVS then provides a virtual reality experience to the virtual attendees during the event, enabling the virtual attendees to virtually attend the event via a virtual venue, which corresponds to virtual extension of the physical venue. In one case, the VSS dynamically grows and shrinks the virtual venue in response to an experienced demand for the event.

## Description

### BACKGROUND

A large-audience venue (such as a stadium, theater, opera house, etc.) typically has a fixed number of seats. The fixed number of seats, together with safety-related regulations, often places an upper limit on the number of people who may attend an event at any given time. To address this constraint, an event sponsor may attempt to choose a venue that best matches the projected interest level of an event. But this is not always possible. In some cases, the demand for an event far outstrips the available number of seats in a venue. In other cases, the demand for an event is low, leaving many unoccupied seats. The net result of both scenarios is loss of revenue for the sponsor who hosts the event.

### SUMMARY

A Virtual Venue System (VVS) is described herein which issues virtual-attendee (VA) tickets for an event taking place at a physical venue, along with physical-attendee (PA) tickets. A PA ticket grants an actual (i.e., physical) attendee the right to physically attend the event in person. A VA ticket grants a virtual attendee a right to virtually attend the event from a remote location with respect to the physical venue. Each ticket, whether a PA ticket or a VA ticket, is associated with an actual position in the physical venue. The VVS then provides a virtual reality experience to the virtual attendees during the event, enabling the virtual attendees to virtually attend the event via a virtual venue, which corresponds to a virtual extension of the physical venue.

In some implementations, the VSS dynamically grows and shrinks the virtual venue in response to the experienced level of demand for the event. In some implementations, the VSS performs this expansion and retraction by adding and removing virtual sections. The virtual sections may correspond to virtual counterparts of existing physical sections of the physical venue.

The VVS also provides various mechanisms that allow actual attendees to interact with virtual attendees (and vice versa). The VSS also allows virtual attendees to interact with other virtual attendees. For instance, the VSS uses various strategies that allow actual attendees to visualize the presence of virtual attendees, and virtual attendees to convey their actions and expressions to the actual attendees (and other virtual attendees). In summary, the VVS allows PA-PA, VA-VA, PA-VA, and VA-PA interactions.

In some implementations, the VSS uses at least one video camera that captures a scene within the physical venue. The scene has a real part in the physical realm that is composed of actual objects, and a virtual part in the virtual realm that is composed of zero, one, or more virtual objects. The VSS may detect the virtual objects in response to sensor information provided by the video camera, which, in turn, generally identifies the location of the video camera within the physical venue, and the direction at which the virtual camera is aimed within the physical venue. In one context, the VSS then composes and delivers broadcast information which represents an integration of the actual and virtual objects.

The above approach can be manifested in various types of systems, devices, components, methods, computer readable storage media, data structures, graphical user interface presentations, articles of manufacture, and so on.

This Summary is provided to introduce a selection of concepts in a simplified form; these concepts are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

Fig. 1 shows an overview of a Virtual Venue System (VSS) for allowing actual attendees and virtual attendees to participate in the same event that takes place in a physical venue.
Fig. 2 shows one implementation of the VSS of Fig. 1, using computing equipment.
Fig. 3 shows an implementation of a Venue Management Module (VMM), which is a component of the VSS of Fig. 1.
Fig. 4 is a depiction of one non-limiting physical venue, which serves as a running example in the following explanation.
Figs. 5-7 show three virtual venues which are built on a "foundation" of the physical venue of Fig. 4.
Figs. 8-11 show strategies by which an individual actual attendee may detect the presence and behavior of virtual attendees.
Fig. 12 shows one strategy by which plural actual attendees may detect the presence and behavior of virtual attendees.
Fig. 13 shows one mechanism by which an actual attendee may find the location of a virtual (or actual) attendee.
Fig. 14 shows one mechanism by which an actual attendee may engage in a communication session with a virtual (or actual) attendee.
Fig. 15 shows one mechanism by which a virtual attendee may participate in an event, via display information which depicts physical and virtual venues.
Fig. 16 shows display information which depicts the physical and virtual venues in a different manner, compared to the example of Fig. 15.
Fig. 17 shows one mechanism by which the VSS (of Fig. 1) can generate broadcast information, depicting a scene captured by at least one video camera. That scene is associated with both real and virtual objects.
Fig. 18 shows one strategy by which a virtual attendee may convey his or her actions and/or expressions to other attendees, where they are represented by an avatar or the like.
Fig. 19 shows another strategy by which a virtual attendee may convey his or her actions and/or expressions to other attendees, here by means of one or more depth camera systems.
Fig. 20 shows a skeletonized version of the virtual attendee of Fig. 19, generated by the depth camera system(s).
Fig. 21 shows one mechanism by which the physical venue may convey collective actions and/or expressions by the virtual attendees.
Fig. 22 is a flowchart that shows one manner of operation of the VSS of Fig. 1.
Fig. 23 is a flowchart that shows an elaboration of the process of Fig. 22, according to one implementation.
Fig. 24 is a flowchart that shows one way in which a remote attendee may convey his or her actions and/or expressions to other attendees.
Fig. 25 is a flowchart that shows one way in which a physical venue may communicate the collective actions and/or expressions of virtual attendees to the actual (and virtual) attendees.
Fig. 26 is a flowchart that shows one way in which the VSS (of Fig. 1) can generate an output result which represents an integration of real and virtual objects associated with a scene.
Fig. 27 shows illustrative computing functionality that can be used to implement any aspect of the features shown in the foregoing drawings.

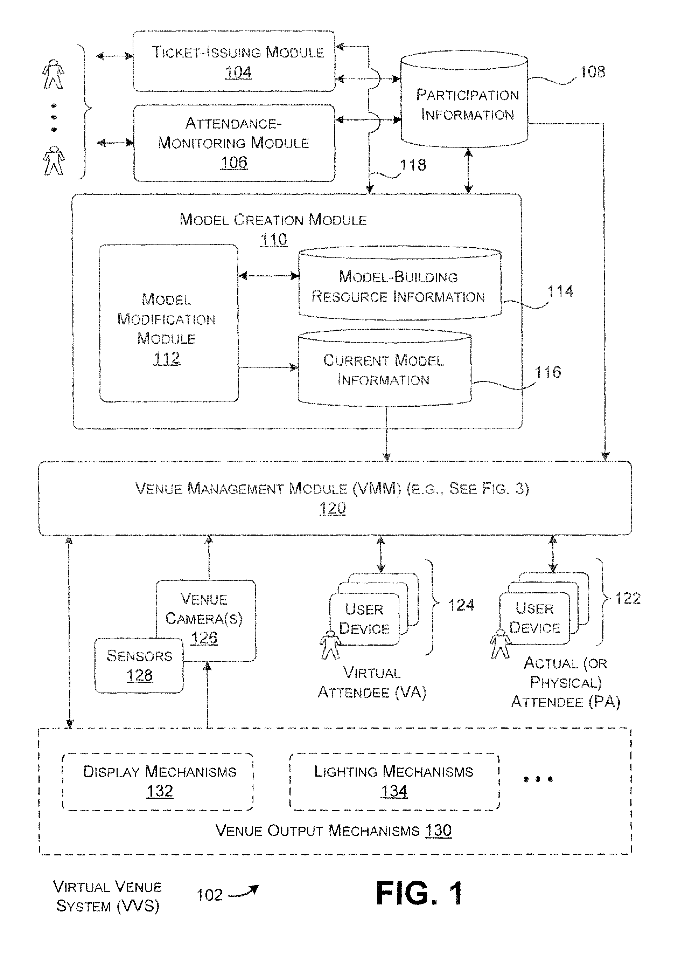

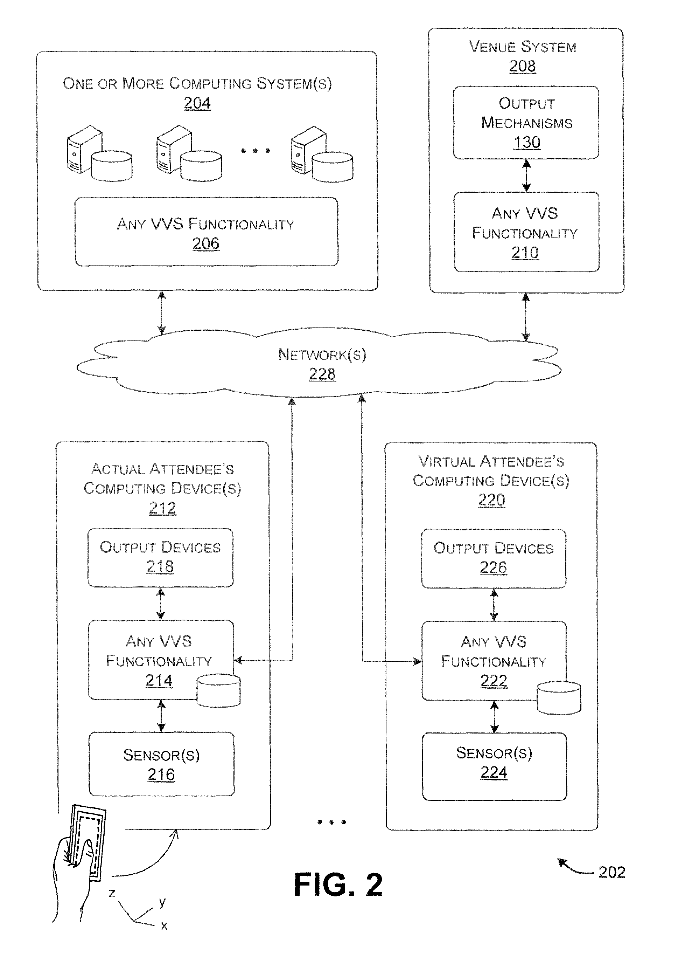

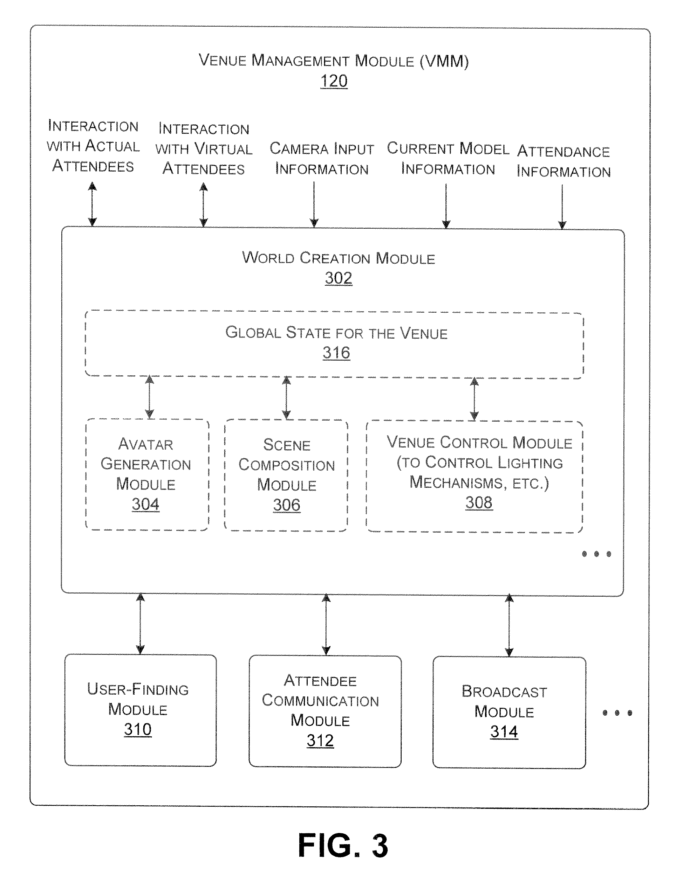

The same numbers are used throughout the disclosure and figures to reference like components and features. Series 100 numbers refer to features originally found in Fig. 1, series 200 numbers refer to features originally found in Fig. 2, series 300 numbers refer to features originally found in Fig. 3, and so on.

### DETAILED DESCRIPTION

This disclosure is organized as follows. Section A provides an overview of a virtual venue system (VVS). Section B sets forth processes which describe one manner of operation of the VVS of Section A. Section C describes illustrative computing functionality that can be used to implement any aspect of the features described in Sections A and B.

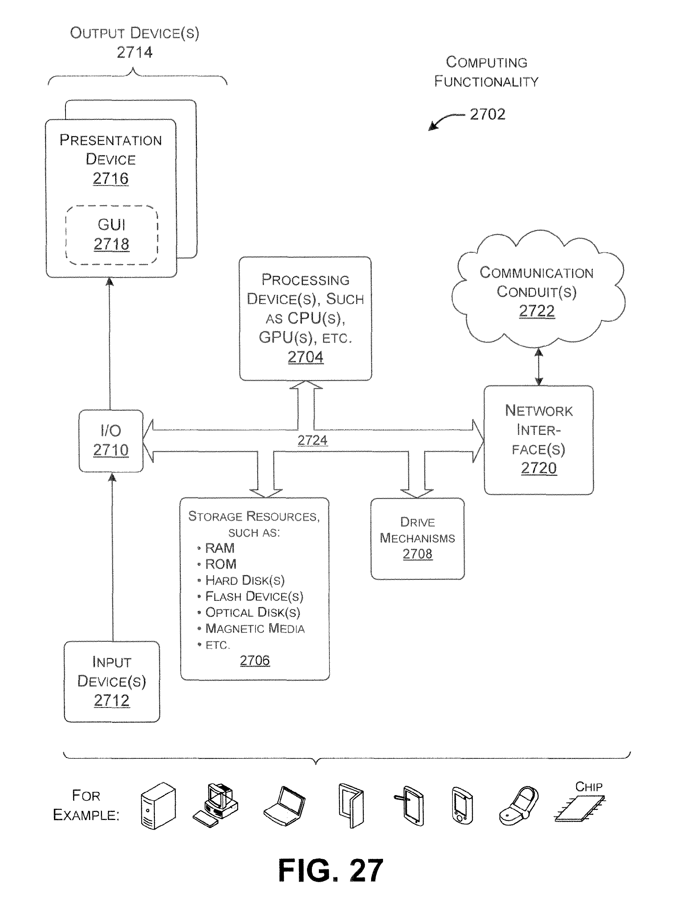

As a preliminary matter, some of the figures describe concepts in the context of one or more structural components, variously referred to as functionality, modules, features, elements, etc. The various components shown in the figures can be implemented in any manner by any physical and tangible mechanisms, for instance, by software running on computer equipment, hardware (e.g., chip-implemented logic functionality), etc., and/or any combination thereof. In one case, the illustrated separation of various components in the figures into distinct units may reflect the use of corresponding distinct physical and tangible components in an actual implementation. Alternatively, or in addition, any single component illustrated in the figures may be implemented by plural actual physical components. Alternatively, or in addition, the depiction of any two or more separate components in the figures may reflect different functions performed by a single actual physical component. Fig. 27, to be described in turn, provides additional details regarding one illustrative physical implementation of the functions shown in the figures.

Other figures describe the concepts in flowchart form. In this form, certain operations are described as constituting distinct blocks performed in a certain order. Such implementations are illustrative and non-limiting. Certain blocks described herein can be grouped together and performed in a single operation, certain blocks can be broken apart into plural component blocks, and certain blocks can be performed in an order that differs from that which is illustrated herein (including a parallel manner of performing the blocks). The blocks shown in the flowcharts can be implemented in any manner by any physical and tangible mechanisms, for instance, by software running on computer equipment, hardware (e.g., chip-implemented logic functionality), etc., and/or any combination thereof.

As to terminology, the phrase "configured to" encompasses any way that any kind of physical and tangible functionality can be constructed to perform an identified operation. The functionality can be configured to perform an operation using, for instance, software running on computer equipment, hardware (e.g., chip-implemented logic functionality), etc., and/or any combination thereof.

The term "logic" encompasses any physical and tangible functionality for performing a task. For instance, each operation illustrated in the flowcharts corresponds to a logic component for performing that operation. An operation can be performed using, for instance, software running on computer equipment, hardware (e.g., chip-implemented logic functionality), etc., and/or any combination thereof. When implemented by computing equipment, a logic component represents an electrical component that is a physical part of the computing system, however implemented.

The following explanation may identify one or more features as "optional." This type of statement is not to be interpreted as an exhaustive indication of features that may be considered optional; that is, other features can be considered as optional, although not expressly identified in the text. Further, any description of a single entity is not intended to preclude the use of plural such entities: similarly, a description of plural entities is not intended to preclude the use of a single entity. Finally, the terms "exemplary" or "illustrative" refer to one implementation among potentially many implementations.

### A. The Virtual Venue System

### A.1.Overview

Fig. 1 shows an overview of a Virtual Venue System (VSS) 102 for allowing actual attendees and virtual attendees to participate in the same event that takes place in a physical venue. As used herein, a "physical venue" refers to any physical setting in which an event takes place. For example, a venue may correspond to a physical structure having physical seats that may be occupied by actual attendees when participating in the event. For example, the physical structure may correspond to a stadium, theater, movie house, opera house, theater, gymnasium, concert hall, meeting house, religious building, and so on. Alternatively, a physical venue may correspond to a physical region that is allotted to host the event, such as an open air region of a public park, a race track, a field, etc. The event that takes place in a physical venue can correspond to any occurrence, such as, without limitation, a sporting match, a concert, a speech, a play, a ceremony, and so on.

A "seat" in the physical venue may correspond to a space at which the person is permitted to attend the event. A seat may define the space with varying degrees of precision, depending on the environment. For example, the seat may correspond to a specific chair within any arrangement of chairs. In other cases, a seat refers to a general region in which the person is expected to attend the event. For example, a seat at an open-air concert may refer to a general region of a hillside that the person is expected to sit.

A digital virtual venue (just "virtual venue" below for brevity), on the other hand, refers to a virtual space that is defined with reference to the physical venue, e.g., as an extension or augmentation of the physical venue. For example, as will be set forth in greater detail below, the virtual venue may correspond to one or more virtual stands that are virtually positioned on top of one or more physical stands within a physical venue. The virtual venue is said to be based or anchored on the physical venue because positions associated with the virtual venue correlate to actual positions in the virtual venue. As will be described, this provision enables virtual objects to be properly superimposed on real objects in the physical venue, that is, at appropriate and meaningful positions relative to the real objects.

As the term is used herein, an "actual" (or physical) attendee (PA) refers to a person who will physically attend the event, e.g., by physically traveling to a stadium and occupying an assigned seat in the stadium. A "virtual" attendee (VA) refers to a real person who will attend the event from a remote location, by interacting with the virtual venue. A virtual attendee may also receive and interact with a representation of the physical venue, such as video information which captures the physical venue, and the event that takes place at the physical venue.

Fig. 1 will now be described, generally in top-to-bottom fashion. Later subsections provide additional detail regarding the operation of selected features in the VSS 102 of Fig. 1. To begin with, a ticket-issuing module 104 grants tickets to prospective attendees of an event. A ticket corresponds to any instrument that grants a person the right to attend the event, either virtually or in person. The ticket may be conveyed in digital and/or physical form (e.g., printed form).

More specifically, the ticket-issuing module 104 may grant physical-attendee (PA) tickets to the prospective actual attendees, and virtual-attendee (VA) tickets to the prospective virtual attendees. A PA ticket entitles its holder to attend the event in person. Further the PA ticket assigns the holder to a particular actual position within the physical venue. As noted above, that position may be specified with different degrees of precision. In a first case, a PA ticket assigns a person to a literal seat or stand position within any arrangement of seat or stand positions. In another case, a PA ticket assigns a person to a general region within the physical venue.

A VA ticket, on other hand, entitles a person to attend the event from any remote location, via the virtual venue. As noted above, a VA ticket also assigns the person to a location within the physical venue. Once again, the location can be narrowly defined as a particular chair or stand position, or more generally, as a region within the physical venue.

In some cases, the position associated with a VA ticket may correspond to an actual position that may otherwise accommodate an actual attendee. For example, the position associated with a VA ticket may coincide with the position of a physical chair in a stadium that could have been occupied by an actual attendee, but is instead allocated to the remote attendee who plans to attend the event in virtual fashion. In other cases, however, the position associated with the VA ticket may correspond to a position that could not be practically occupied by an actual attendee. For example, the position may correspond to a chair in virtual stands, where those stands are virtually defined as "hovering" over the highest tier of physical stands.

A number of environment-specific conditions and constraints may apply to PA tickets and VA tickets. In one case, a person who holds a PA ticket is not permitted to attend the event in virtual fashion, instead of attending the event in person. Similarly, a person who holds a VA ticket may not be permitted to attend the event in person, that is, in those cases in which the VA ticket actually corresponds to a real seat in the physical venue. But these rules are not fixed. In other cases, a PA ticket holder may be permitted to attend in virtual fashion, and/or a VA ticket holder may be permitted to attend in person (where it is physically possible for him or her to do so).

Section B will describe different strategies for granting PA tickets and VA tickets. By way of overview, in one approach, the ticket-issuing module 104 grants PA tickets until the physical seating capacity of the physical venue is exceeded, or some other capacity-related threshold is met. (As used herein, the term "capacity-related threshold" refers to any condition related to attendance by participants, and does not necessarily correspond to a maximum capacity.) The ticket-issuing module 104 may thereafter grant VA tickets to people requesting tickets. In other cases, the ticket-issuing module 104 may freely allow, at any time, a person to buy or otherwise acquire either a PA ticket (if available) or a VA ticket.

Further, any environment-specific strategy can be applied to price the tickets. In some cases, an event sponsor can sell the VA tickets at a lower cost than the PA tickets. Further, different kinds of PA tickets may have different prices; likewise, different kinds of VA tickets may have different prices. For example, the cost of both a PA ticket and a VA ticket may depend, in part, on the position of the associated seat, relative to the event. Generally, in both cases, a position that is close to the action of the event is more desirable and expensive than a position that is relatively far from the action. In yet other cases, the ticket-issuing module 104 may grant tickets for free, or based on any other form of exchange (other than money).

In addition, or alternatively, the ticket-issuing module 104 may grant PA and VA tickets based on various types of promotional strategies. For example, the ticket-issuing module 104 may grant the user a PA ticket if he or she makes a purchase related to an event, player, team, league, etc. associated with the venue (such as by buying a T-shirt related to an event to be held, or which has been held, at the venue). Or the ticket-issuing module 104 may grant the user a ticket if he or she makes multiple purchases (such as multiple prior ticket purchases), and/or performs any other identified reward-granting action.

In actual practice a person may purchase or otherwise acquire a ticket in any manner, such as by purchasing the ticket in online fashion via a website or the like, and/or by physically interacting with a ticket vendor, where that vendor, in turn, interacts with a computing system to issue the ticket, and so on. For example, the ticket-issuing module 104 may correspond to a computer system that is accessible via a website, or a computer system that is available to a ticket vendor.

An attendance-monitoring module 106 determines, at the time of the event and/or after the event, the actual attendance of the event. For example, the attendance-monitoring module 106 can integrate with ticket-reading equipment provided at the entry of the physical venue (not shown) to determine how many people are physically attending the event at any given time, and the positions associated with those people (as specified by the PA tickets). Similarly, the attendance monitoring module 106 may monitor, during the event, the virtual attendees who are virtually participating in the event. The attendance-monitoring module 106 can determine this information based on sign-in information or the like, entered by the virtual attendees when they virtually join the event from their remote locations.

A data store 108 maintains participation information. The participation information may identify the tickets that have been purchased, the positions associated with those tickets, the types associated with those tickets (e.g., actual or virtual, etc.), the identities of the people who have purchased the tickets, and so on. During the event, the participation information may further capture any information regarding the attendees who are actually attending the event, whether actual or virtual. Generally note that the term "data store," in all cases used herein, may refer to one or more underlying physical data stores, provided at a single site or distributed among two or more sites; the data store is referred to in the singular only for convenience of reference.

A model creation module 110 provides a model of the virtual venue and the underlying physical venue. In one implementation, the model creation module 110 generates the model by expanding a core model. The core model, in turn, may describe the configuration of the actual physical venue. For, example, the core model may correspond to a computer-aided design (CAD) file which describes the actual physical venue. The model creation module 110 can create the virtual venue by expanding the core model in various environment-specific ways.

For example, in one case, the model creation module 110 can metaphorically stretch the core model in the vertical dimension. The model creation module 110 can perform this task by adding additional stands "on top" of a top tier of existing physical stands, and/or by extending existing stands and walls in any manner (e.g., by radially expanding a bowl-shaped arena in all directions to include new peripheral virtual regions), etc. In another case, the model creation model 110 adds new sections laterally adjacent to existing stands in the core model. Subsection A.2 will provide further details regarding possible strategies that the model creation module 110 may employ in extending the core model.

In the context of Fig. 1, the model creation module 110 includes a model modification module 112 which performs the above-described model-expansion task. The model modification module 112 operates on model-building resource information in a data store 114. The model-building resource information may, in one implementation, describe the above-noted core model. The model modification module 112 stores the expanded model that it creates in a data store 116. That expanded model is referred to herein as current model information. It describes the core physical model, as modified to create any type of virtual space.

An arrow 118 in Fig. 1 indicates that the ticket-issuing module 104 may consult the current model information when granting tickets, including both PA tickets and VA tickets. For example, as will be described below, the ticket-issuing module 104 may grant VA tickets to only sections of the virtual venue that exist at the current time. For example, the ticket issuing module 104 may grant VA tickets for seats in only the existing virtual stands that exist at the current time, as defined by the current model information.

The model creation module 110 also interacts with the participation information produced by the ticket-issuing module 104 and the attendance-monitoring module 106. For example, when the model creation module 110 detects that the pool of available seats in the physical venue is approaching full occupancy, it may create at least one virtual section, such as virtual stands. And when that virtual section is nearly "full," the model creation module 110 may create another virtual section, such as other virtual stands. In other words, in one manner of operation, the model creation module 110 expands the core model associated with the physical venue in an on-demand manner, depending on the number of people who have requested to attend the event.

A Venue Management Module (VMM) 120 broadly represents the functionality that enables any attendee (whether virtual or actual) to interact with the virtual venue (and the underlying physical venue). The VMM 120 also allows any attendee (whether virtual or actual) to interact with any other attendees (whether virtual or actual). The VMM 120 also generates broadcast information that may integrate real objects (associated with the physical venue) with virtual objects (associated with the virtual venue), and then delivers that broadcast information to one or more recipients.

A collection of user computing devices 122 are operated by actual (or physical) attendees (PAs) at the event. For instance, the computing devices 122 allow the actual attendees to observe the presence of the virtual attendees (in the manner described below), and then to interact with these virtual attendees. A collection of user computing devices 124 are operated by, or other otherwise associated with, virtual attendees (VAs). For instance, the computing devices 124 allow the virtual attendees to convey actions, expressions, etc. to the actual attendees and/or to other virtual attendees.

Note that Fig. 1 illustrates the VMM 120 as a singular component which is independent of the computing devices (122, 124). But as will be clarified below, the VMM 120 represents functionality that can be distributed among various components of the VSS 102 Fig. 1, including the computing devices (122, 124). In other words, Fig. 1 illustrates the VMM 120 as a single component to facilitate explanation and illustration, not to convey a necessary characteristic of this component.

The VMM 120 may also receive video information from one or more video cameras 126. The video cameras 126 are physically present at the physical venue. They capture video information that represents the event that is taking place at the physical venue, such as a sporting event that is occurring on a field of action, and/or, optionally, the interactions that are occurring within the stands. The video cameras 126 may also include, or otherwise be associated with, sensors 128. The sensors 128 provide sensor information that describes at least the locations of the video cameras 126 within the physical venue, and the orientations of the video cameras within the physical venue. As will be explained in greater detail below, the VMM 120 uses the video information and the sensor information to produce broadcast information, which, as said, may combine real objects and virtual objects.

Finally, the VMM 120 may also control one or more venue output mechanisms 130, corresponding to physical output equipment provided at the physical venue. For example, the VMM 120 may use crowd participation information obtained from the virtual and/or actual participants to control display mechanisms 132, lighting mechanisms 134, and so on. The display mechanism 132 may correspond to typically large-sized display screens provided at the physical venue. The lighting mechanisms 134 control the lighting in the physical venue. Other output mechanism (not shown) may control an audio system, a temperature system, a laser-display system or other type of projected-light system, a ventilation system, and so on. In yet other cases, the VMM 120 may control motorized roofs, wall panels, etc. For example the VMM 120 may move a motorized roof during an event to reveal the night sky.

Fig. 2 shows one implementation of the VSS 102 of Fig. 1, using a computing framework 202. The computing framework 202 is generally constructed using a collection of computing devices of various types, controlled by various entities. The components of the computing framework 202 may be distributed over any number of locations.

The computing framework 202 may include one or more computing systems 204. The computing systems 204, in turn, include VSS functionality 206 that performs one or more of the above-described tasks of the VSS 102. More specifically, the VSS functionality 206 may implement the ticket-issuing module 104, the attendance-monitoring module 106, the data store 108, the model creation module 110, and at least parts of the VMM 120. From a physical standpoint, the computer systems 204 may correspond to one or more server computing devices and associated data stores, provided at a single site or distributed over two or more sites.

Fig. 2 further shows a venue system 208 that includes VVS functionality 210. The VVS functionality 210 implements other functions of the VSS 102 of Fig. 1. For example, the VVS functionality 210 may implement the part of the VMM 120 which controls the output mechanisms 130. Again, the output mechanisms 130 may include display mechanisms 132, lighting mechanisms 134, and so on. The venue system 208 may be physically implemented as one or more computing devices of any type, such as one or more server computing devices and associated data stores.

An actual attendee may interact with at least one computing device 212. The computing device 212 may include any VVS functionality 214. The VVS functionality 214 may, among other tasks, implement parts of the VMM 120. For example, the VVS functionality 214 may provide a mechanism which allows the actual attendee to visualize the presence of virtual attendees, and then interact with those virtual attendees, and so on. The VVS functionality 214 may also include a data store that stores a local copy of the current model information, which describes the layout of the physical venue and the associated virtual venue.

The VVS functionality 214 may interact with sensor information provided by one or more sensors 216. The sensors 216 can include any of: one or more accelerometers; one or more gyroscopic sensors; one or more vibratory sensors tuned to various motion frequency bandwidths; one or more mechanical devices to detect specific postures or movements of the computing device 212 or parts of the computing device 212 relative to gravity; one or more torque sensors; one or more strain gauges; one or more flex sensors; one or more optical encoder mechanisms, and so on. Furthermore, any movement-type detection mechanism (such as any accelerometer or gyroscopic mechanism) can sense movement along any number of spatial axes, such as three axes.

In addition, the sensors 216 can determine the position of the computing device 212 using one or more techniques, such as a satellite-based location technique (e.g., a GPS technique), a dead-reckoning technique, a triangulation technique, and so on. In another case, the location-determining sensor(s) can determine the position of the computing device 212 with reference to local wireless signal sources in the physical venue. In addition, the sensors 216 can include one or more video cameras for capturing video information, infrared information, etc. In addition, the sensors 216 can include one or more microphones, and so on.

In one manner of use, the sensors 216 provide sensor information which enables the VVS functionality 214 to determine a direction at which the user is pointing the computing device 212 at a particular location in the virtual venue. That sensor information, in turn, correlates to a field of view of the computing device 212 at the current point in time. The field of view may demarcate one or more real objects and one or more virtual objects.

The computing device 212 may also include one or more output devices 218. For example, the computing device 212 may include one or more display devices of any type(s), one or more speakers for presenting audio information, one or more haptic output devices (e.g., for vibrating the computing device 212), one or more display-projection output devices, one or more hologram devices, a printer, and so on.

In some implementations, the computing device 212 may correspond to a smartphone, a tablet-type computing device, a personal digital assistant device, a portable media consumption device (such as a music-playing device or an e-book reader device), a wearable computing device, and so on. Further, the actual attendee may carry and use two or more computing devices while attending the event. For example, the actual attendee may use both a smartphone and tablet-type computing device to interact with a virtual attendee, e.g., by using the smartphone to visualize the presence of the virtual attendee, and using the tablet-type computing device to simultaneously conduct a video communication session with the virtual attendee.

A remote attendee may also interact with at least one computing device 220. The computing device 220 may include any VVS functionality 222 that may, among other tasks, implement parts of the VMM 120 of Fig. 1. For example, the VVS functionality 222 may provide a mechanism which allows the virtual attendee to convey his or her actions and expressions to other attendees, whether actual or virtual. The VVS functionality 222 may also include a data store that stores a local copy of the current model information, which describes the layout of the physical venue and the associated virtual venue.

The VVS functionality 222 may interact with one or more sensors 224 and one or more output devices 226. The sensors 224 may include any of the types of sensing devices described above, with respect to the actual attendee's computing device 212. In addition, the sensors 224 may encompass one or more depth-sensing camera systems ("depth camera systems," for brevity). The depth camera systems use one or more depth reconstruction techniques to determine the locations and shapes of objects in three-dimensional space, and the movements of those objects. For example, the depth camera systems may use a structured light technique, a stereoscopic technique, a time-of-flight technique, and so on. One commercially available depth camera system that may be used to provide depth information is the Kinect® system provided by Microsoft® Corporation of Redmond, Washington.

The output devices 226 may include one or more display devices of any type(s), one or more audio output devices, one or more haptic output devices, one or more display-projection output devices, one or more hologram output devices, one or more printers, etc.

The virtual attendee's computing device 220 may correspond to any of the portable-type computing devices described above, with reference to the actual attendee's computing device 212. In addition, or alternatively, the virtual attendee's computing device 220 may correspond to a stationary personal computing device, a set-top box device, a game console device, a computing device that is integrated with the depth camera system(s), and so on. Further, the virtual attendee, like the actual attendee, may interact with two or more computing devices at any given time, e.g., to perform different respective tasks in the virtual venue.

One or more networks 228 couple the above-described components together. The networks 228 can include a wide area network (e.g., the Internet), a local area network, one or more point-to-point links, and so on, or any combination thereof. The networks 228 can also use any mechanisms to transmit signals, such as hardwired lines, wireless signals, and so on, as governed by any protocol or combination or protocols.

Fig. 3 shows further details regarding the functions that may be performed by the Virtual Management Module (VMM) 120 of Fig. 1. To begin with, Fig. 3 indicates that the VMM 120 may receive input information from various sources. For example, the VMM 120 may receive: input information that originates from actual attendees; input information that originates from the virtual attendees; input information that originates from one or more video cameras 126; current model information that originates from the model creation module 110; participation information maintained in the data store 108, and so on.

The VMM 120 may include a world creation module 302 for performing, in part, various graphics-related tasks, based on the above-described input information. For example, the world creation module 302 can include an avatar generation module 304 for generating avatars which represent the virtual attendees. The world creation module 302 may also include a scene composition module 306 for creating a three-dimensional scene, which may include the avatars produced by the avatar generation module 304 as part thereof. The three-dimensional scene may also incorporate video information produced by the video cameras 126.

In one implementation, the avatar generation module 304 and the scene composition module 306 may use a graphics engine for performing their respective tasks, e.g., by leveraging a graphics pipeline. For instance, the graphics engine may use known techniques to represent objects in a three-dimensional space as 3D models, e.g., composed of meshes of vertices, textures applied to the meshes, etc. The graphics engine may also use known techniques for manipulating the objects, based on user instructions. The graphics engine may also include known techniques for projecting the objects from specified viewpoints. The graphics engine may also use known techniques for rendering a three-dimensional scene for presentation on a display device, and so on.

The world creation module 302 may also include a venue control module 308 for controlling the operation of the output mechanisms 130 described above, including the display mechanisms 132, the lighting mechanisms 134, and so on. As will be described, as one function, the venue control module 308 may assess collective actions, expressions, etc. of the virtual attendees and/or the actual attendees. The venue control module 308 may then control the output mechanisms 130 on the basis of that collective behavior.

A user-finding module 310 enables an actual attendee to locate a virtual attendee in the virtual venue, or another actual attendee who is physically present in the physical venue. The user-finding module 310 performs its task by identifying the position associated with the sought-after attendee (which is specified by the attendee's ticket), and then specifying that position in a representation of the actual venue and/or the virtual venue. The user-finding module 310 may also allow a virtual attendee to find another virtual attendee or an actual attendee. An attendee communication module 312 allows any attendee (virtual or actual) to interact with any other attendee (virtual or actual). A broadcast module 314 delivers broadcast information to one or more recipients. The broadcast information may integrate real and virtual objects, as will be set forth in greater detail below.

The VMM 120 is again illustrated as a discrete and singular module to facilitate explanation. But aspects of the various VMM modules described above can actually be implemented by different components of the VSS 102 of Fig. 1. For example, certain aspects of the VMM 120 may be implemented in local fashion by the local computing devices (212, 220), operated by actual and virtual attendees. Other aspects of the VMM 120 may be implemented by one or more server computing devices and data stores provided by the computing systems 204 and/or the venue system 208.

For example, the computing systems 204 may perform high-level management tasks, such as routing information among actual attendees and virtual attendees, and maintaining information regarding a global state 316 associated with the actual and virtual venues (as maintained in one or more data stores). For example, the global state 316 can reflect the current configuration of the virtual venue (as specified by the current model information), the current positions of the attendees in the actual and virtual venues, the current behaviors of the attendees, the collective behaviors of the attendees, and so on. The computing systems 204 may also distribute local copies of the current model information to the local computing devices (212, 220). The local computing devices (212, 220) can perform graphics processing tasks using the locally-stored current model information, e.g., by implementing at least aspects of the avatar generation module 304 and the scene composition module 306. In performing these tasks, the local computing devices (212, 220) can also consult the global state 316, maintained by the remote computing systems 214, to determine the real time locations and behaviors of virtual attendees.

To provide one concrete example, suppose that an actual attendee wishes to locate a virtual attendee who is attending the event, e.g., by leveraging the function of the user-finding module 310. The local computing device of the actual attendee can use its locally-stored current model information and the scene composition module 306 to display a representation of at least the virtual venue. The attendee's computing device can then interact with the remote computing systems 204, and the global state 316 stored there, to determine the location of the desired virtual attendee, and/or the current behavior of the current attendee. The attendee's computing device can then rely on the avatar generation module 304 and its local graphics processing capabilities to render a representation of the virtual attendee, in the context of the virtual venue. It is even possible to reduce reliance on the remote computer systems 204 by periodically downloading some global state information to the local computing devices, e.g., which may reveal the positions of the attendees. Alternatively, the local computing devices (212, 220) may rely on the remote computing systems 204 to perform at least some graphics processing tasks, particularly in those cases in which the tasks are resource-intensive in nature. Indeed, in other cases, the remote computing systems 204 can perform most or all of the graphics processing tasks, and then deliver the results of that processing to the local computing devices.

Generally speaking, there are many strategies that can be used to allocate functions between the remote computing systems 204 and the local computing devices (212, 220), each associated with an environment-specific performance objective. Functions may be allocated to the local computing devices whenever it is desirable to reduce information-transfer bandwidth and provide more responsive performance; functions may be allocated to the remote computing systems 204 whenever it is appropriate to lessen the burden on the local computing devices, and/or leverage additional computing resources, etc.

### A.2. Mechanisms for Generating Virtual Venues

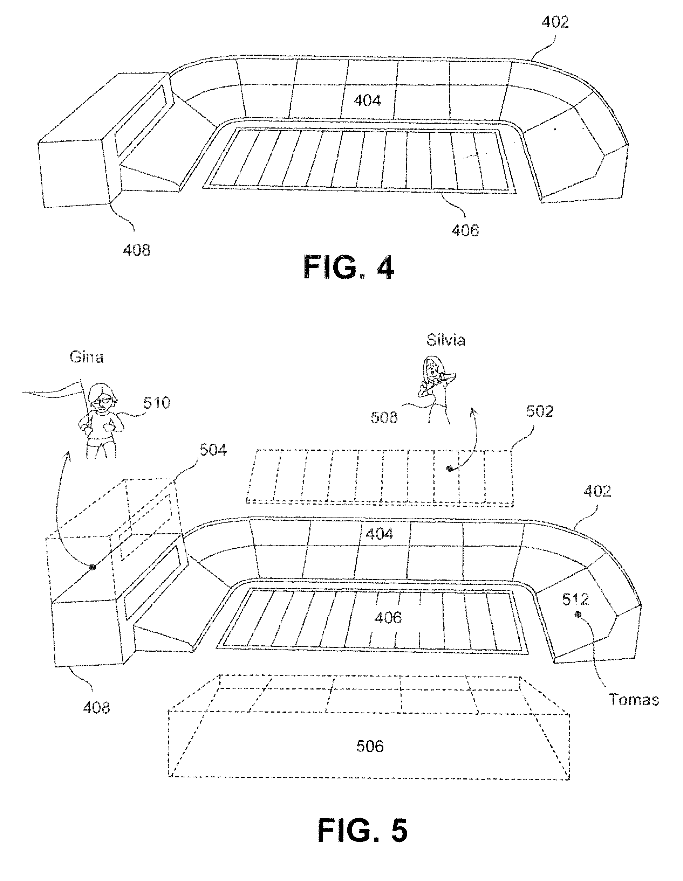

Fig. 4 is a depiction of one non-limiting physical venue 402, which serves as a running example in the following explanation. All aspects of this physical venue are illustrative, rather than limiting. The VSS 102 of Fig. 1 can be applied to any physical venue of any size, shape, complexity, seating plan, and so on. Further, a physical venue may correspond to a closed space, an open-air space, or some combination thereof.

In the case of Fig. 4, the physical venue 402 corresponds to a stadium for playing a sport, such as American football, or soccer. The stadium includes physical stands 404 for seating actually attendees. The physical stands 404 form a portion of a bowl, formed around three sides of a playing field 406. No stands are placed adjacent to the fourth side of the playing field 406. But again, this configuration is merely illustrative; in many other stadiums, the stands from a complete bowl around the perimeter of the playing field. The physical venue 402 may also include an enclosed seating region 408. For example, the enclosed seating region 408 may offer box seats. In some environments, the box seats may be regarded as more desirable than the stand seats. For instance, the box seats may be accompanied by more amenities compared to the stand seats, and/or may offer better views of the playing field 406 compared to the stand seats, etc.

From a high level perspective, the physical venue 402 exhibits a collection of basic building blocks. For example, the stands 404 include a plurality of sections that are radially arrayed around the playing field 406. Further, the stands 404 form a lower tier, closest to the playing field 406, and an upper field, located vertically above, and in back of, the lower tier. The enclosed seating region 408 likewise forms a box-like shape at one end of the playing field 406.

As shown in Fig. 5, the model creation module 110 creates a virtual venue that extends the basic shapes of the physical venue 402. For example, the model creation module 110 can create virtual stands 502 which "hoover" above the upper tier of the physical stands 404. The model creation module 110 also adds an upper-level enclosed seating region 504, having the same box-like shape as the lower-level enclosed seating region 408, and virtually stacked on top of the lower-level enclosed seating region 408. Finally, the model creation module 110 adds virtual stands 506 which are positioned along the side of the playing field 406 which has no physical stands. In other words, to produce the virtual stands 506, the model creation module 110 creates a mirror image of the physical stands 404 that lie on the opposite side of the playing field 406. These modifications and extensions are described by way of illustration, not limitation; the physical venue 402 can be extended in any manner.

In one manner of operation, the model creation module 110 adds virtual sections to the physical venue in a manner that does not interfere with the physical sections of the physical venue in which actual attendees are seated. The model creation module 110 can adopt this strategy to reduce potential ambiguity when a user later seeks to interact with attendees who are participating in the event, including actual and remote attendees. For example, it is possible to define a virtual seat that overlaps with a physical seat that is already occupied by an actual attendee. Yet this approach may introduce potential ambiguity. For example, when a person seeks to visualize the person who is located at that position, he will find that there are two people at that position, which may confuse the observer. But nevertheless, in some physical venues, it may be considered appropriate to assign two or more attendees to the same physical space.

In some cases, the model modification module 112 can also virtually modify the representation of the physical venue. For example, the model modification module 112 can virtually knock out walls and add stands in place of the walls. Or the model modification module 112 can add stands that seem to float on a water surface, in those cases in which the venue is located adjacent to a body of water, and so on. In yet other cases, the model modification model 112 can add virtual seating in the parking lot, or even in the sidelines of the field. These modification choices are environment-specific in nature, influenced, in part, by the nature of the physical venue, and/or perhaps business-related constraints that may apply to venue.

In other cases, the model modification module 112 can extend a physical venue using building blocks that are not associated with the existing shapes of the physical venue. For example, the model modification module 112 can use a template to add virtual stands to a physical venue, where that template does not derive from the core model that describes the existing physical venue. In yet other case, the model modification module 112 can add fantastical extensions based on any theme, where those extensions need not be architecturally sound in a physical sense. In additional to structural characteristics, the model modification module 112 can assign any surface appearance to the virtual venue (e.g., according to a selected color, texture, pattern, theme, image-content, etc.).

Each virtual attendee has a position in the virtual venue in the same sense that each actual attendee has a position, although the virtual attendees are not actually present at that position. For example, a person named Silvia has purchased a VA ticket which places her avatar 508 in the virtual stands 502. A person named Gina has purchased another VA ticket which places her avatar 510 in the upper-level enclosed seating region 504. Silvia and Gina may be physically present in any part of the world, providing that they have access to the computing framework 202 shown in Fig. 2. On the other hand, a person named Tomas is located at a position 512 in the physical stands 404. In the examples that follow, assume that Tomas is a friend of Silvia and will wish to interact with her during the event that the three of them are attending.

The avatars (508, 510) shown in Fig. 5 correspond to three-dimensional cartoon-like characters, and are controlled by the respective virtual attendees (Silvia and Gina, respectively). The VMM 120 can also optionally allow the virtual attendees to choose and customize their avatars, e.g., by pasting pictures of themselves over the faces of the avatars. In other cases, the avatars may correspond to two-dimensional characters. In other cases, the avatars may correspond to icons of any nature that only indicate the locations of the virtual attendees.

The virtual venue, in the context of Fig. 5, may correspond to all the virtual spaces, and the virtual objects presented in the virtual spaces, that are formed on the "foundation" of the physical venue 402. For example, the virtual venue includes the virtual stands 502, the upper-level enclosed seating region 504, the laterally-mirrored virtual stands 506, and all of the virtual participants who "occupy" their virtual seats in the above-described virtual regions.

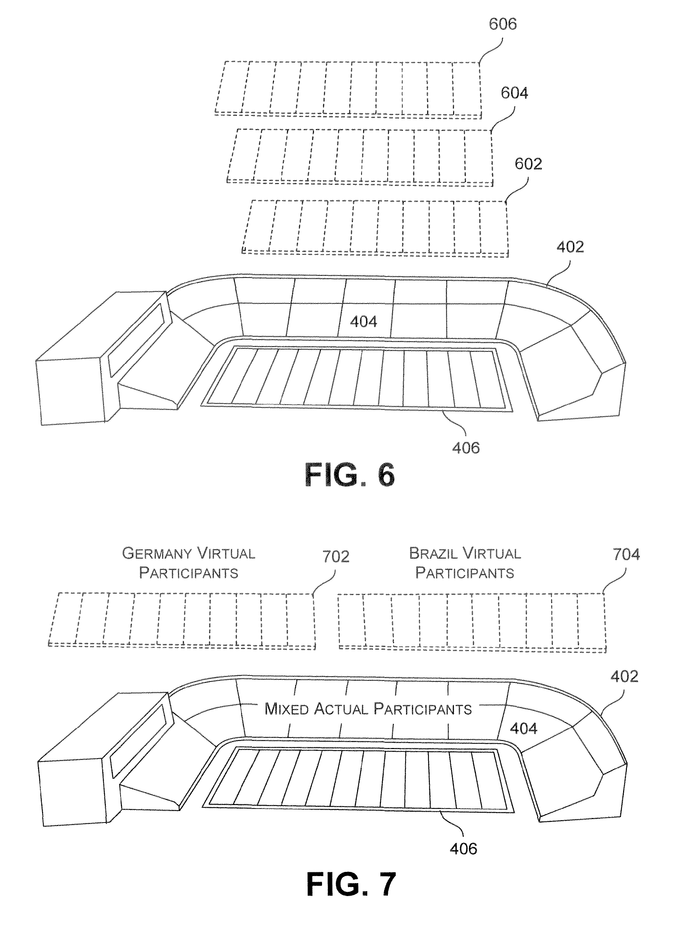

Fig. 6 illustrates one manner by which the model creation module 110 can incrementally and dynamically add virtual stand sections to the physical venue 402. For example, assume that the model creation module 110 adds first virtual stands 602 when all physical seats are filled by actual attendees in the physical stands 404, or some other capacity-related threshold has been reached. The model creation module 110 then adds second virtual stands 604 above the first virtual stands 602 when the first virtual stands 602 reach their full capacity of virtual attendees. The model creation module 110 then adds third virtual stands 606 above the second virtual stands 604 when the second virtual stands 604 become full. This manner of adding virtual sections is environment-specific in nature; other environments can apply other strategies to add virtual sections to the virtual venue.

Fig. 7 shows another strategy for adding virtual sections to the physical venue 402, to produce a virtual venue which supplements the physical venue. Assume that the event in this scenario corresponds to a sporting match between a team that originates from Germany and a team that originates from Brazil. Here, the model creation module 110 adds first virtual stands 702 to host the fans of the German team, and second virtual stands 704 to host the fans of the Brazilian team. The German and Brazilian fans may enjoy this grouping because it facilitates interaction among fans that share the same affiliations, likes, and dislikes. Other ways of grouping attendees are also possible (e.g., by age, gender, musical affinities, and so on).

In some implementations, the ticket-issuing module 104 may permit a user to select his or her seat at the time of purchase, whether actual or virtual. In some implementations, the ticket-issuing module 104 may also allow an attendee to change a seat assignment. In some implementations, the ticket-issuing module 104 may alternatively, or in addition, allow the user to select general section preferences, without specifying a specific seat, and then optionally change those preferences. In other environments, a sponsor may place greater restrictions on the ability of an attendee to select and/or change a seat assignment.

Further, an administrator of the virtual venue can permit or prohibit antagonistic interaction among virtual attendees, or between virtual and real attendees, depending on environment-specific objectives and/or user preferences. Or the administrator can provide a tool that allows an actual or virtual attendee to block interaction with a virtual attendee who is acting in an annoying or otherwise undesirable manner. An administrator may also independently monitor the behavior of virtual attendees. An administrator may restrict the capabilities of troublesome attendees, and, in extreme cases, virtually evict and/or ban an attendee from the virtual venue.

### A.3. Mechanisms for Use by Actual Attendees

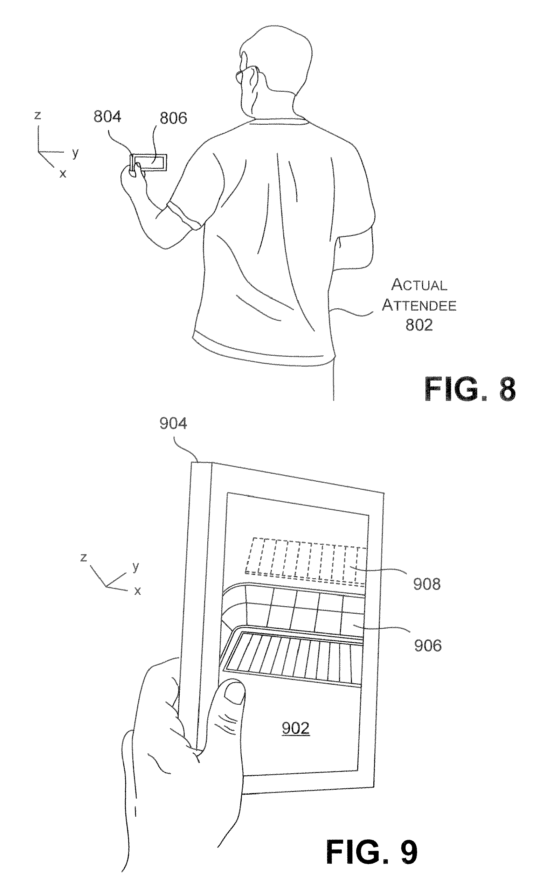

Figs. 8-11 show strategies by which an individual actual attendee may detect the presence of virtual attendees. Beginning with Fig. 8, assume that an actual attendee 802 aims his smartphone 804 (or other portable computing device) in a particular direction while attending an event at a physical venue. In one mode of operation, the video camera(s) of the smartphone 804 captures a scene that lies in front of the smartphone 804, as defined by a field of view which extends out from the smartphone. The smartphone 804 also includes a display screen 806. The display screen 806 displays the video information captured by the video camera(s) of the smartphone 804, generally corresponding to whatever real objects are enclosed by the field of view of the video camera(s).

Further, the sensors of the smartphone 804 provide sensor information that indicates the location of the user at the current time, as well as the orientation at which the user is aiming the smartphone 804. The VMM 120 (of Figs. 1 and 3), in turn, uses the sensor information to identify a portion of virtual space that the user is investigating, although that space is not visible to the naked eye or to the video camera(s). The VMM 120 can then identify the virtual objects that lie within the defined virtual space. The VMM 120 can then create display information which superimposes the real objects (captured by the video camera(s)) and the virtual objects. The VMM 120 is able to perform this superimposition, in part, because the virtual realm and the actual realm use the same coordinate system of real positions. In other words, for example, if a virtual attendee is expected to be seated at a particular real chair in a stadium, the actual attendee should be able to detect that person by pointing his smartphone at that empty chair.

Fig. 9 shows an example of information that may be displayed by a display screen 902 of a tablet-type computing device 904, when an actual attendee points the tablet-type computing device 904 in a particular direction, from a particular position within the physical venue. More specifically, the display screen 902 shows a representation 906 of the physical stands of the physical venue, as captured by the video camera(s) of the tablet-type computing device 904. The display screen 902 also shows a representation 908 of virtual stands which are positioned above the physical stands. The representation 906 of the physical stands corresponds to real objects associated with a captured scene, while the representation 908 of the virtual stands corresponds to virtual objects associated with the scene.

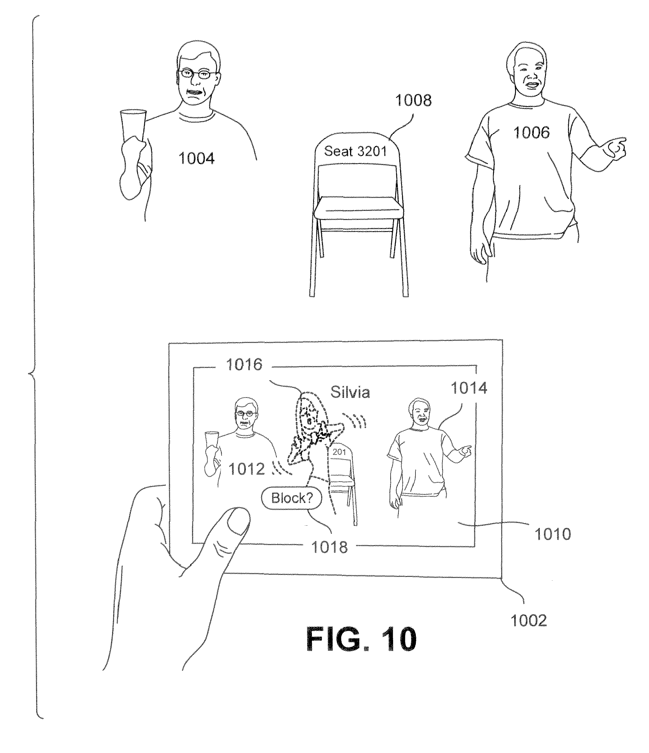

Fig. 10 shows a case in which an actual attendee now points his tablet-type computing device 1002 in the direction of two actual attendees (1004, 1006). These actual attendees (1004, 1006) are seated on either side of an empty seat 1008. Assume that the VSS 102 assigns a virtual attendee to that empty seat 1008, corresponding to the person named Silvia. The actual attendee who is manipulating his tablet-type computing device 1002 will see, on its display screen 1010, representations (1012, 1014) of the two actual attendees (1004, 1006), captured by the video camera(s) of the type-type computing device 1002. Further, the actual attendee will see a representation 1016 of the virtual attendee, Silvia. That is, the actually attendee will see the avatar of Silvia because the user is pointing the tablet-type computing device 1002 in the direction of a portion of the virtual space which includes that avatar. Assume, at this particular moment in time that Silvia has directed her avatar to cheer, so the representation 1016 shows a cheering behavior. The actual attendee can optionally block audio and/or visual information regarding this avatar, e.g., by actuating a block control 1018. The VMM 120 may place the control 1018 in proximity to the virtual object to which it pertains. In another implementation, the control 1018 may apply to all virtual objects in the scene.

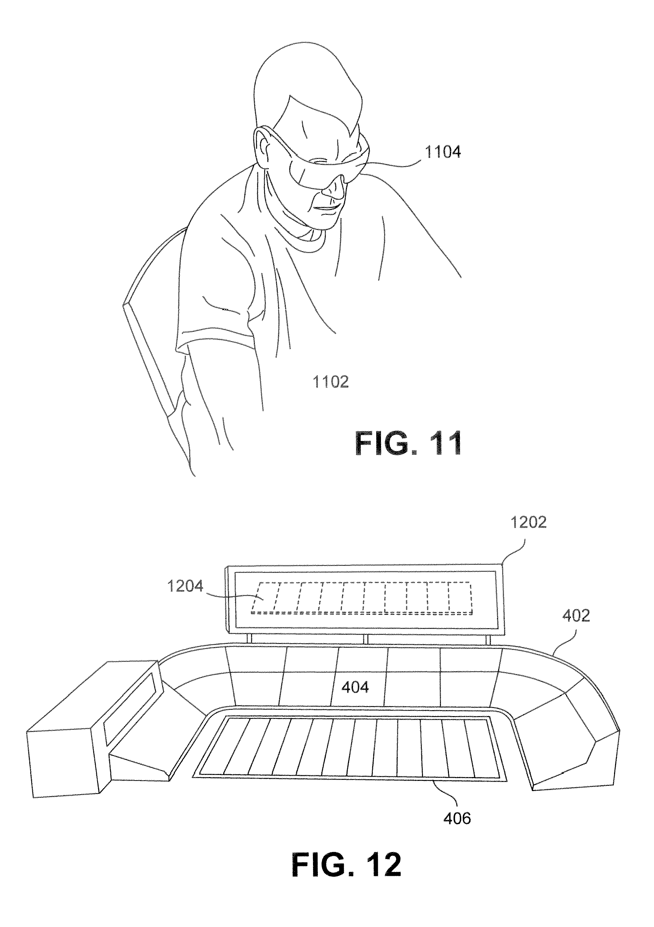

Fig. 11 shows an actual attendee 1102 who is attending an event at a physical venue, and who is currently interacting with a wearable computing device 1104, here, an eyeglass-type wearable computing device. In one case, the wearable computing device 1104 has a half-silvered eyeglass surface which allows the actual attendee 1102 to see through the surface and observe real objects in the physical venue. Alternatively, the wearable computing device 1104 can use video cameras to capture the real objects, and a display screen to display a representation of the real objects to the actual attendee 1102. In addition, the wearable computing device 1104 includes sensors which provide sensor information; that sensor information defines the location of the attendee 1102 and the direction which the attendee 1102 is presumed to be looking at the present time, which, in turn, defines a portion of virtual space that includes one or more virtual objects. The wearable computing device 1104 may project representations of the virtual objects on a display screen of the wearable computing device 1104, in such a manner that they appear to overlap the real objects, and at correct positions with respect to the real objects. Overall, the wearable computing device 1104 provides a similar user experience compared to that shown in Figs. 9 and 10.

In the case of Fig. 12, assume that the physical venue 402 includes a large display screen 1202, enabling all (or many) of the actual attendees (and virtual attendees) to view the content presented by the display screen 1202 while attending the event. Here, the physical venue 402 positions the display screen 1202 above the physical stands 404, e.g., in the fashion of a large billboard-type display. But the physical venue 402 can incorporate display screens in other ways, such as by affixing the display screens to existing walls of the physical venue. Alternatively, or in addition, the venue may project a display onto any surface of the physical venue.

In the scenario of Fig. 12, the VMM 120 uses the display screen 1202 to display a representation 1204 of virtual stands. Since the display screen 1202 is large, the representation 1204 may appear to observers as a virtual extension of the underlying physical stands 404, and an observer may even begin to ignore the fact that the virtual attendees are not actually physical present in the stadium. As will be described below, the VMM 120 can also leverage the display screen 1202 to present other information, such as by conveying the collective actions and expressions of the virtual attendees.

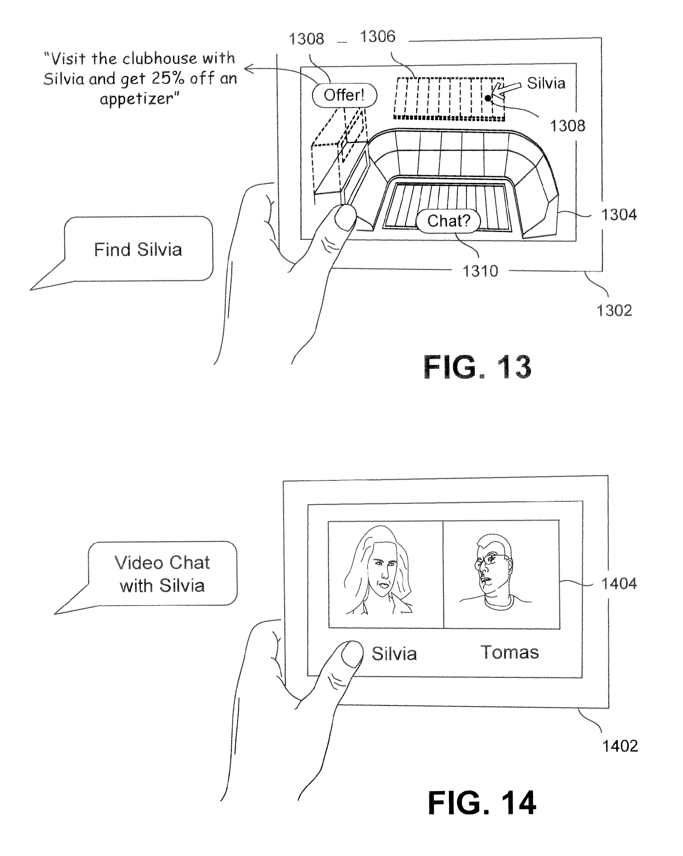

Fig. 13 shows one mechanism by which an actual attendee may find the location of a virtual (or actual) attendee. More specifically, the actually attendee orients his tablet-type computing device 1302 in a particular direction, within a particular location within the virtual venue. The resultant scene presented on the display screen of the computing device 1302 includes a representation 1304 of the physical venue (captured by the device's video camera(s)), and a representation 1306 of at least one virtual section of the virtual venue. Assume that the actual attendee wants to locate his friend, Silvia. To do so, the user may enter the name of Silvia into a search box interface, or, as here, speak the name, "Silvia." The VMM 120 may respond by showing indicators of all virtual attendees who have the same Silvia. Assume that there is only one such person, and her position in the virtual space is marked by the icon 1308. The user may then initiate a video communication session with Silvia by activating a "Chat" control 1310, or by touching the icon 1308, or by entering a voice command, etc. Alternatively, assume that Silvia is not present in the field of view currently being captured by the device 1302. The VMM 120 can address this situation in different application-specific ways, such as by presenting a pop-up panel that shows the entire venue, and the location of Silvia in the venue. The actual attendee may thereafter point the device 1302 in the appropriate direction to more precisely locate Silvia.

In other cases, the actual attendee can perform a search based on other search attributes, e.g., without necessarily identifying a specific person at the outset. For example, the actual attendee can perform a search to find virtual (and actual) attendees) who have any specified characteristics, such as by finding users who have similar likes and dislikes, demographic characteristics, etc.

The VMM 120 may also use the above opportunity to present an offer 1312 to the actual attendee (Tomas) who has performed the search, and/or to the person who is the target of the search (Silvia). That is, the VMM 120 can invite Tomas to visit a clubhouse at some time in the future with Silvia, to receive a discount on food, etc.

Fig. 14 shows a representation of a video communication session performed by the VMM 120 between the actual attendee named Tomas, and the virtual attendee named Silvia. The computing device 1402 in this case presents video information 1404 which provides representations of the two attendees, Silvia and Tomas. For example, the VMM 120 may use the Skype™ system provided by Microsoft Corporation® of Redmond, Washington, to conduct the video communication session.

### A.4. Mechanisms for Use by Virtual Attendees

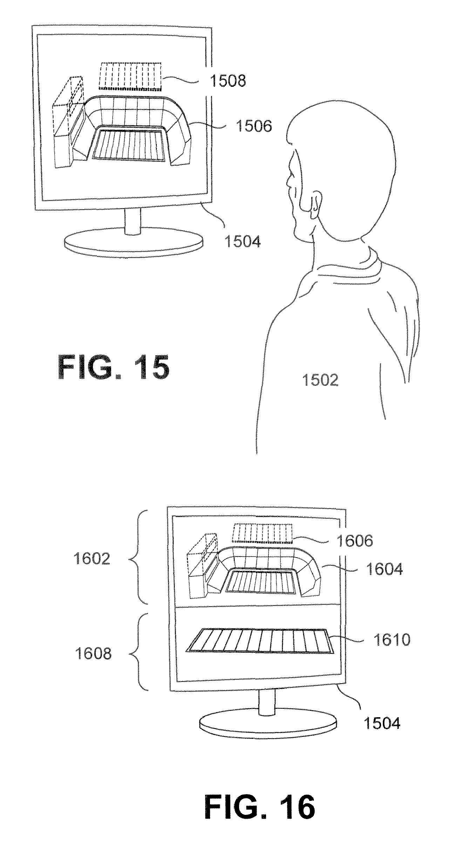

Fig. 15 shows one mechanism by which a virtual attendee 1502 may virtually participate in an event, via a virtual venue defined by the VSS 102. More specifically, in this case, the user interacts with a display device 1504 of any type, such as a television screen, a computing device's display monitor, a projected display, a hologram, etc., or any combination thereof. Alternatively, or in addition, the virtual attendee 1502 may interact with a display device of any type provided by any type of portable computing device described above.

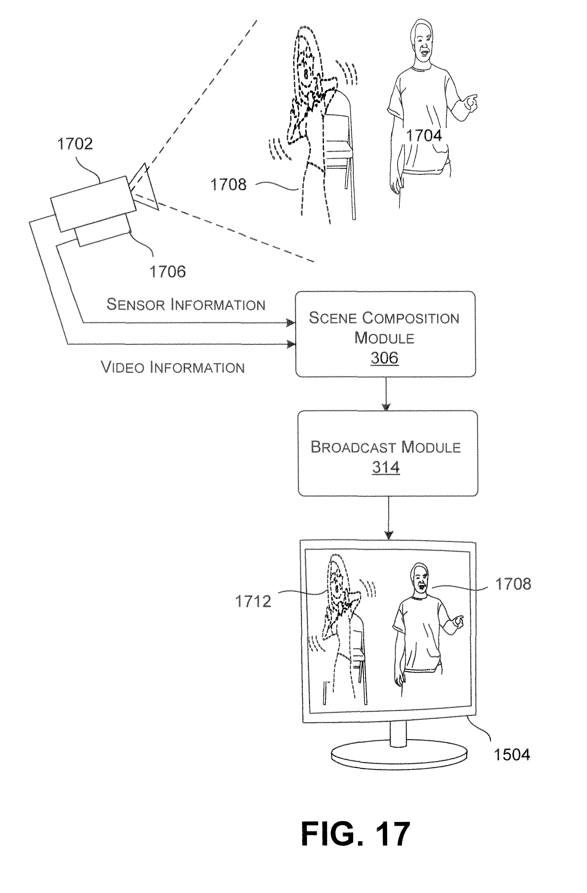

In any case, the display device 1504 presents display information. The display information includes a representation 1506 of the physical venue, along with a representation 1508 of the virtual venue. For example, in one case, the VMM 120 can integrate the representations into a single presentation, and then broadcast that presentation to one or more remote participants, including the virtual attendee 1502. Fig. 17, to be described below, provides further details regarding one manner performing this operation. In another case, the VMM 120 can broadcast the real objects separately from the virtual objects, and a computing device provided by the virtual attendee can reassemble the real and virtual objects into an integrated presentation for the virtual attendee.

In the alternative case of Fig. 16, the VMM 120 can provide display information in two sections of the display device 1504, or on two different display devices (not shown). That is, in a first section 1602, the VMM 120 can display a representation 1604 of the physical venue and a representation 1606 of the virtual venue. But here, the representation 1604 of the physical venue may correspond to a static image that does not capture the action associated with the event itself (e.g., which may correspond to a televised sports match). Instead, a second section 1608 may provide a representation 1610 of the event itself, as captured by the video cameras in the physical venue. The virtual attendee 1502 may interact with the first section 1602 to perform such tasks as identifying the location of other virtual attendees, and/or communicating with other attendees, both virtual and real. The virtual attendee 1502 may interact with the second section 1608 to watch the event itself. By contrast, in the scenario of Fig. 15, the remote attendee 1502 can perform all the above functions with respect to the integrated display information provided on the display device 1504.

In either Fig. 15 or Fig. 16, the virtual attendee 1502 may find the location of an actual or virtual attendee using the same technique described above with respect to Fig. 13. Further, the virtual attendee 1502 may initiate a chat with an actual or virtual attendee using the same technique set forth with respect to Fig. 14.

As a further feature, recall that the virtual attendee 1502 has been allocated a VA ticket, which correspond to a particular position in the physical venue, which may or may not correspond to an actual physical seat in the physical venue. That position may afford the virtual attendee a certain view of the event, as if that attendee was physically present at that location. In one implementation, the VMM 120 can present a depiction of the physical and virtual venues which reflects the same vantage point. The VMM 120 may perform this task by generating and displaying a depiction of the current model information, on which the physical and virtual venues are predicated, from the vantage point of the virtual attendee's seat in the physical stadium. As to the video information associated with the event, the VMM 120 can choose the video information produced by the video camera(s) which most closely matches the virtual attendee's vantage point from within the physical venue. Alternatively, the VMM 120 can give the virtual attendee 1502 the option of watching the event from different vantage points within the physical venue, and with respect to the video information produced by different corresponding video cameras. And in some cases, as noted above, the VVS 102 may permit a virtual attendee to change his or her seat, even during the event. The VVS 102 can track all seat changes in its global state 316 so that the attendees can continue to be properly located by other attendees, including actual attendees.

Fig. 17 shows one mechanism by which the VMM 120 can generate broadcast information based on a scene captured at the physical venue. In this case, assume that at least one video camera 1702 captures video information within the physical venue. More specifically, that video information captures a representation of an actual attendee 1704 and an empty seat next to the actual attendee 1704. Sensors 1706 associated with the video camera 1702 also capture sensor information. For example, the sensors 1706 can include any of the position-sensing, movement-sensing, and orientation-sensing mechanisms described above, with respect to Fig. 2. The sensor information therefore at least captures the position of the video camera 1702 within the physical venue, as well as the orientation of the video camera 1702 at that location.

The scene composition module 306 receives the video information and the sensor information. Based on the sensor information, the scene composition module 306 can determine the virtual space at which the video camera 1702 is pointed, and the virtual objects enclosed by that space. Here, at least one virtual object corresponds to the avatar 1708 of the virtual attendee Silvia, who has a VA ticket that positions her avatar in the empty seat next to the actual attendee 1704. The scene composition module 306 then integrates the identified real objects with the virtual objects, to produce broadcast information.

A broadcast module 314 broadcasts the broadcast information to one or more remote participants, including the virtual attendee 1502 of Fig. 15. The broadcast module 314 can deliver the broadcast information using any medium and infrastructure, such as by streaming video information over a wide-area network (e.g., the Internet) for consumption by computing devices, by sending television signals via existing communication infrastructure of any type (cable, wireless, satellite, etc.) for consumption by television sets, and so on. The broadcast may be live (real time), near real time, or not real time (e.g., previously recorded and later broadcast). The display information that is presented on the display device 1504 in the above scenario includes a representation 1710 of the actual attendee 1704, together with a representation 1712 of the virtual attendee, Silvia. In other words, the functionality of Fig. 17 treats the virtual objects that "appear" within the virtual venue as if they were actual objects that are present in the physical venue itself. Such a display gives the observer the visual impression that the virtual world is seamlessly integrated with the actual physical world, with respect to the physical venue under consideration.

In one implementation, for the above particular scenario, the functions of the scene composition module 306 and the broadcast module 314 are performed by the remote computing systems 204. In other cases, at least some aspects of these functions may be performed in local fashion by the recipients' computing devices.

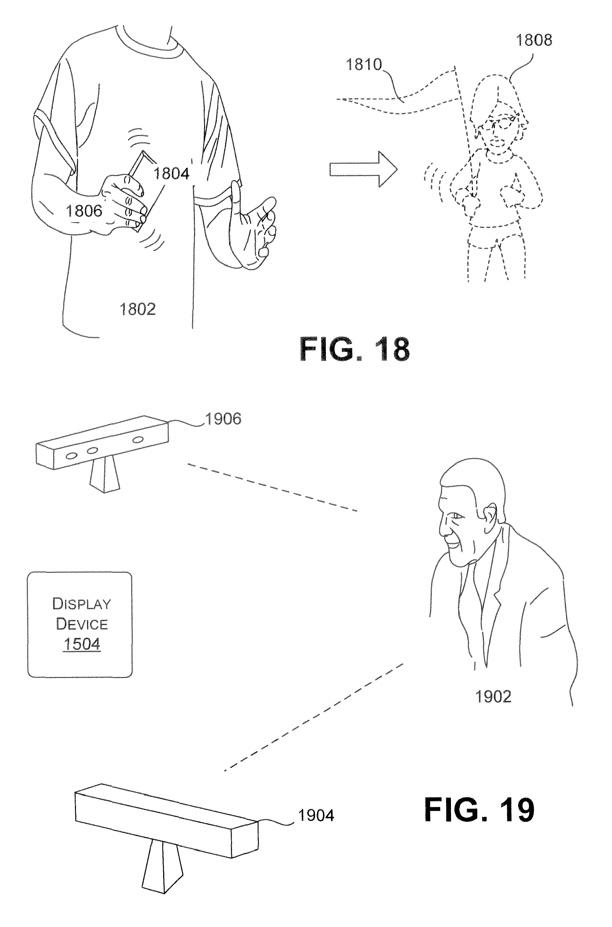

Fig. 18 shows one strategy by which a virtual attendee 1802 may convey his or her actions and/or expressions to the virtual venue, where they are represented by an avatar or the like, and may be observed by any attendee (either actual or virtual). In this scenario, the virtual attendee 1802 interacts with a smartphone 1804 or other type of handheld computing device. For example, here the virtual attendee 1802 shakes her smartphone 1804 back and forth with one hand 1806. The VMM 120 receives sensor information from the smartphone 1804 which provides a telltale signature that indicates that the user has shaken the smartphone 1804 in a prescribed manner. In response, the VMM 120 can control a corresponding avatar 1808 to shake a virtual pendant 1810 back and forth, or a virtual scarf, etc.

The virtual attendee 1802 can perform other telltale movements to convey other instructions. For example, the virtual attendee 1802 can flick the smartphone 1804 in an upward direction to instruct her avatar 1808 to jump out of her virtual seat. Or the virtual attendee 1802 can move the smartphone 1804 in a line-casting movement to signal a booing action.

Alternatively, or in addition, the virtual attendee 1802 can enter any of the above instructions in a more explicit manner, e.g., by selecting these options in a menu provided by the smartphone 1804, or other computing device. For example, the virtual attendee 1802 can select options in the menu which prompts the avatar to shout, grimace or scowl, wave its hands in the air, etc. In a music event, the virtual attendee 1802 can instruct the avatar to light a virtual lighter during a song, to indicate appreciation of the music being played. In other cases, the virtual attendee may convey a state of mind, e.g., by selecting a mood option in a drop-down menu to indicate that she is not happy with a referee's decisions. The term "behavior information" generally represents any action, expression, emotion, etc. exhibited by an attendee.

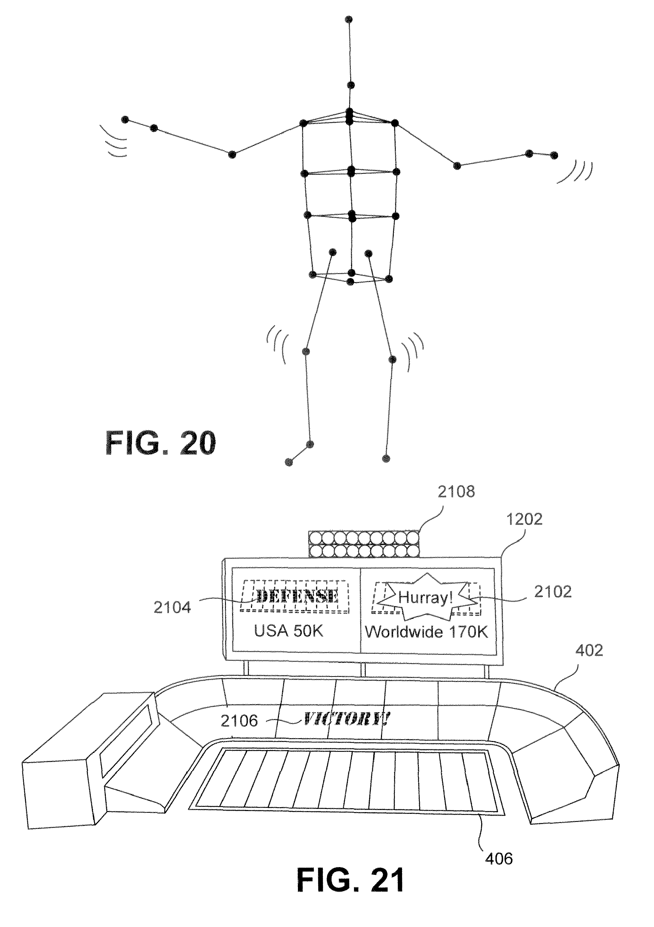

Fig. 19 shows another strategy by which a virtual attendee 1902 may convey his or her actions to the virtual venue, here by means of one or more depth camera systems (1904, 1906), while watching the type of display device 1504 described above. In one implementation, the depth camera systems (1904, 1906) may be implemented using the Kinect® depth camera system provided by Microsoft® Corporation. This type of depth camera system captures depth information from a physical scene using a structured light technique. The depth camera system then uses the depth information to identify three-dimensional objects in the scene, and the movements of those objects. More specifically, the depth camera system forms a skeletonized representation of a person in front of the depth camera system, such as the skeletonized representation shown in Fig. 20. The depth camera system can then compare the movements of that skeletonized representation with telltale movement patterns of reference models, provided in a database. That database of telltale patterns, in turn, can be generated using a machine learning technique, based on a corpus of training images.

In the context of the scenario of Fig. 19, the virtual attendee 1902 can perform various actions, such as jumping up, raising his hands, shaking a real pendant, pointing, etc. The virtual camera system can detect those actions. The VMM 120 can then cause a corresponding avatar to mimic those actions in the virtual space.

### A.5. Mechanisms for Conveying Collective Behavior in a Physical Venue

Fig. 21 shows one mechanism by which the physical venue may convey the collective behavior of the virtual attendees and/or actual attendees. As in the running example described above, the physical venue 402 includes stands 404 and a playing field 406, and a large display screen 1202 positioned above the stands.

In one scenario, the VMM 120 determines the number of virtual attendees who are performing particular actions, such as instructing their respective avatars to wave their scarfs. The VMM 120 can then determine whether the number of attendees performing this action reaches a prescribed level. If so, the action may be considered as a qualifying collective action. The VMM 120 can then present a visual indication of this collective action on the display screen 1202, such as by showing a representation of a large group of virtual users waving their scarfs. Or the VMM 120 displays a message 2102, such as "Hurray" or the like.

The VMM 120 can perform the same operations with respect to shared expressions conveyed by the virtual attendees, where those expressions may correspond to specified states of mind that do not necessarily correlate to explicit user movements. The virtual attendees may specify expressions of this nature in any manner, e.g., by selecting a particular mood entry in a drop-down menu of mood entries.

In another scenario, the virtual attendees may be explicitly instructed by the VMM 120 to perform an action in unison. For example, the VMM 120, or some virtual or actual attendee that is acting as a team leader, may lead the virtual attendees (and/or the actual attendee) in a chant. Or the VMM 120 can instruct certain virtual attendees to lift information-bearing cards at a particular time; collectively, those cards spell out a word 2104 or compose an image on the display screen 1202, such as the word "Defense." The virtual attendees can "lift" their cards in any manner, e.g., by performing a telltale movement using their respective computing devices, or by selecting a specified menu option using their computing devices, etc. The actual attendees may perform a similar task by lifting physical cards in unison in the physical stands 404, e.g., to display the word "Victory" 2106.

In another scenario, the VMM 120 can modify a lighting mechanism 2108 provided by the physical venue in response to collective actions and/or expressions by the virtual attendees (and/or the actual attendees). For example, the VMM 120 can detect the collective behavior of the attendees as described above. In response, the VMM 120 can change the intensity, color, on/off status, etc. of the lighting mechanism 2108. For example, assume a number of virtual attendees who are virtually raising their arms in the air in unison exceeds a prescribed threshold. In response, the VMM 120 can change the color of the light projected by the lighting mechanism 216. Or suppose that a number of virtual attendees merely reaches a specified attendance level. The VMM 120 can again using the lighting mechanism 2108 to convey that achievement to any attendee of the event, whether actual or virtual.

To repeat, the choice of a large billboard-type display screen 1202 is cited by way of example, not limitation. The display could alternatively, or in addition, correspond to information projected on any surface. In addition, or alternatively, the indication of collective attendee behavior could be conveyed using a display which appears in virtual space, not the real physical realm.

Further, the type of lighting mechanism 2108 shown in Fig. 21 is just one of many possible lighting strategies. Other venues, for instance, may deploy lighting mechanisms around the perimeter of the venue. In that situation, the VMM 120 can control the lighting mechanism in a rolling fashion, e.g., to create the visual impression that certain changes "move" around the perimeter of the venue in response to certain collective behavior by the attendees. In addition, or alternatively, other venues can provide laser display mechanisms or other types of projected light mechanisms, pyrotechnic mechanisms, fog, mist, or smoke mechanisms, and so on.

### B. Illustrative Processes

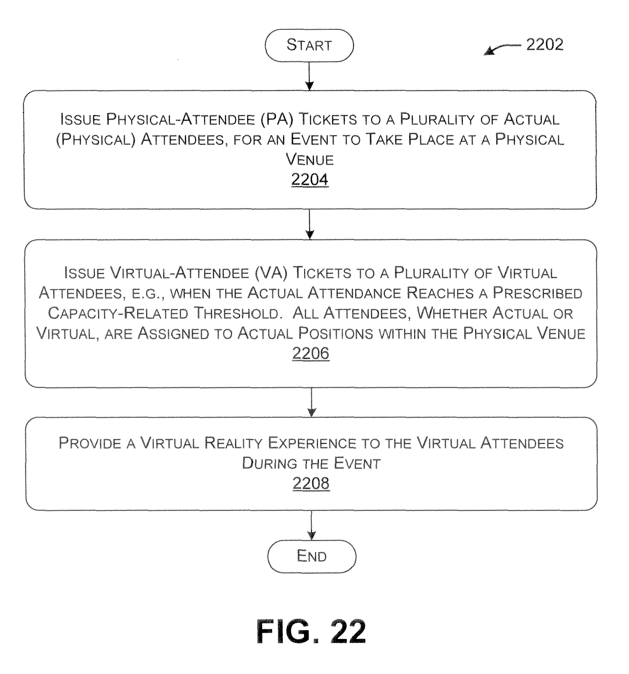

Figs. 22-26 show procedures that explain one manner of operation of the Virtual Venue System (VVS) 102 of Section A. Since the principles underlying the operation of the VSS 102 have already been described in Section A, certain operations will be addressed in summary fashion in this section.

Fig. 22 is a process 2202 that provides an overview of manner of operation of the VSS 102 of Fig. 1. In block 2204, the VSS issues physical-attendee (PA) tickets to a plurality of prospective actual attendees. In block 2206, the VSS 102 issues virtual-attendee (VA) tickets to a plurality of prospective virtual attendees. In one case, the VSS 102 can perform block 2206 when the actual attendance reaches or nears a prescribed capacity-related threshold, such as a maximum capacity of the physical venue. All attendees, whether actual or virtual, are assigned to actual positions with the virtual venue. In block 2208, the VSS 102 provides a virtual reality experience to the virtual attendees during the event.

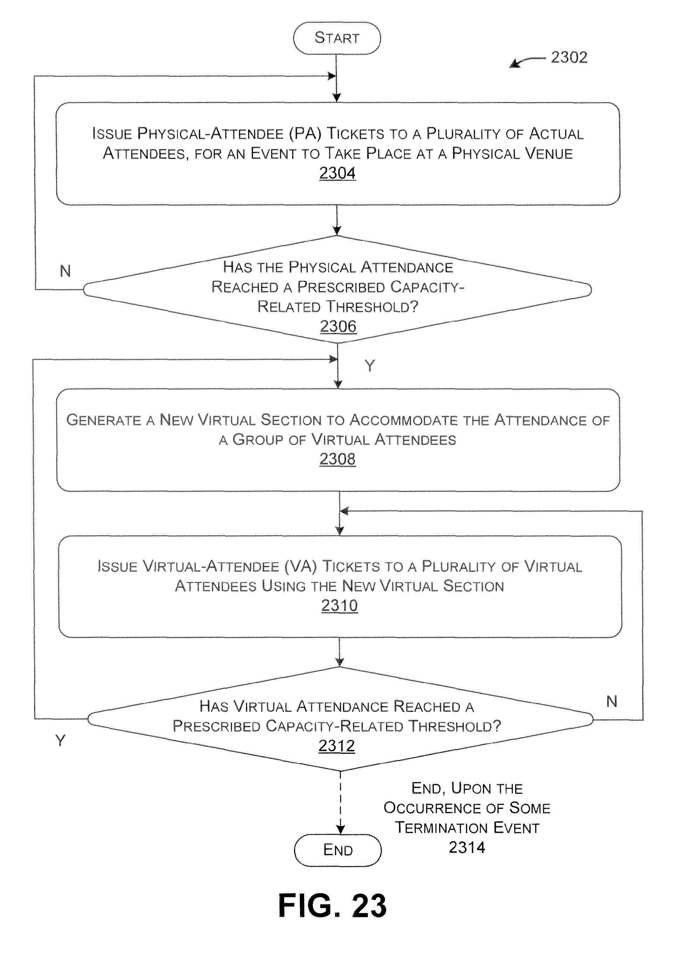

Fig. 23 is a process 2302 that represents an elaboration of the process 2202 of Fig. 22, according to one implementation. In block 2304, the VSS 102 issues PA tickets to actual attendees. In block 2306, the VSS 102 determines whether the prospective (planned) attendance by actual attendees has reached or is nearing a prescribed capacity-related threshold. If so, in block 2308, the VSS 2308 generates a virtual section of the virtual venue. As described above, the virtual section may be placed in relation to the physical structure of the physical venue, e.g., by positioning the virtual section as stands above the highest physical stands of the physical venue. In block 2310, the VSS 102 continues by issuing VA tickets to virtual attendees, assigning those attendees to positions within the virtual section created in block 2308. In block 2312, the VSS 102 determines whether the virtual section created in block 2308 is now full of virtual attendees, or nearing that state. If not, then the VSS 102 continues to fill up the virtual section that was created in block 2308. But if the virtual section is full or nearly full, then the VSS 102 returns to block 2308, at which point it creates a new virtual section, e.g., in some cases, corresponding to other virtual stands above the previous virtual section. Block 2314 indicates that the above procedure repeats until some termination event occurs, such as the end of a window in which attendees are permitted to register for the event.

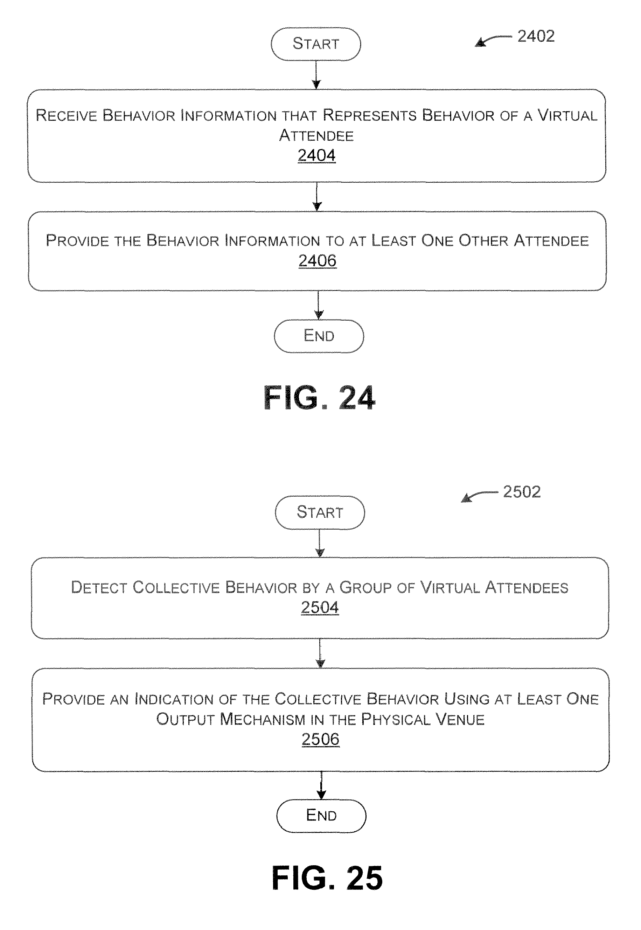

Fig. 24 is a process 2402 that shows one way in which a remote (virtual) attendee may convey his or her actions, expressions, emotions, etc. to other attendees. In block 2404, the VMM 120 receives behavior information in response to behavior exhibited by the virtual attendee at a remote location, describing the actions, expressions, emotions, etc. of the virtual attendee. For example, the virtual attendee may convey behavior by interacting with a user computing device in any manner, e.g., by explicitly entering instructions into the computing device (e.g., via a menu selection or the like, voice instruction, etc.), by performing a telltale gesture via a touch sensitive user interface of the computing device, by moving the computing device in a prescribed manner, and so on. Alternatively, or in addition, the virtual attendee may specify behavior information via at least one depth camera system, and so on. In block 2406, the VMM 120 provides the behavior information to at least one other attendee, either virtual or actual.

Fig. 25 is a process 2502 that shows one way in which a physical venue may communicate the behavior of a group of virtual attendees. Or the process 2502 can be used to convey some other occurrence associated with the virtual attendees, such as the attendance status of the virtual attendees. In block 2504, the VMM 120 detects behavior (e.g., common actions and/or expressions) performed by the virtual attendees. For example, the VMM 120 can detect when a prescribed number of virtual attendees virtually jump up in their respective virtual seats. In block 2506, the VMM 120 provides an indication of the collective behavior that has been detected. For example, the VMM 120 can convey the collective actions and/or expressions via the display mechanisms 132, the lighting mechanisms 134, and so on, or any combination thereof. The same approach can be used to detect and convey the behavior of actual attendees.

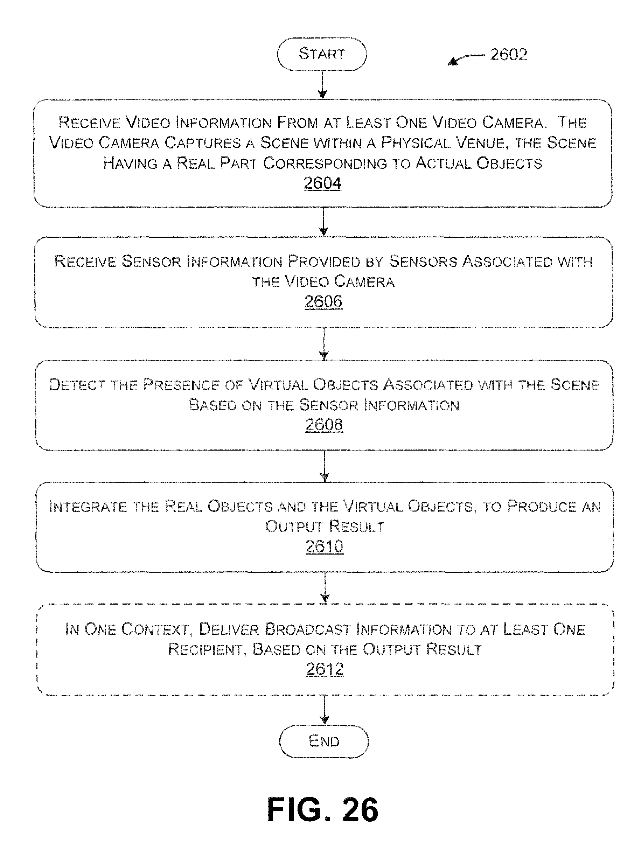

Fig. 26 is a process that shows one way in which the VMM 120 can integrate real and virtual objects associated with a scene, to produce an output result. In block 2604, the VMM 120 receives video information from at least one video camera within a physical venue. More specifically, the video camera captures a scene within the physical venue that encompasses at least one actual object. In block 2606, the VMM 120 receives sensor information provided by sensors that are associated with the video camera. The sensor information describes at least a direction at which the video camera is pointed within the physical venue, and a position of the video camera within the physical venue. In block 2608, the VMM 120 detects the presence of virtual objects associated with the scene based on the sensor information. In block 2610, the VMM 120 integrates the actual objects and the virtual objects, to produce an output result.

In one context (e.g., as shown in Fig. 9), the procedure 2602 is invoked when an actual attendee points his or her user computing device in a particular direction within the physical venue. Here, the video camera and the sensors are provided by the user computing device, and the recipient of the output result is the actual attendee. In another context (e.g., as shown in Fig. 17), the procedure 2602 is invoked by the VMM 120 to produce broadcast information for delivery to recipients. Here, the video camera and the sensors capture the event at the physical venue, and the output result constitutes broadcast information. Further, in block 2612, the broadcast module 314 delivers the broadcast information to at least one recipient.

In summary, the VSS 102 of Fig. 1 may provide one or more benefits. For example, the VSS 102 can allow a sponsor of an event to dynamically expand and retract the "size" of the venue to suit the demand level of the associated event. This provision, in turn, enables the sponsor to sell tickets even through the physical seating capacity of the physical venue may have been exceeded. In other cases, the sponsors may attempt to compensate for weak actual sales of tickets by encouraging people to attend in virtual fashion. The pool of prospective people who may be interested in attending the event in virtual fashion may be much larger than then the group of people who are able and willing to attend in person. All such considerations may increase the revenue of the event sponsor.

An end user may like the VSS 102 because it allows the user to participate in events that are difficult or impossible for the user to attend in person (due to any number of factors). The user is also less likely to be closed out of an event which he or she wishes to attend. The user may further enjoy the tools that enable him or her to find and interact with other attendees.

### C. Illustrative Computing Functionality

Fig. 27 shows computing functionality 2702 that can be used to implement any aspect of VVS 102 of Fig. 1. For instance, the type of computing functionality 2702 shown in Fig. 27 can be used to implement any component of the computing framework 202 of Fig. 2. In all cases, the computing functionality 2702 represents one or more physical and tangible processing mechanisms.

The computing functionality 2702 can include one or more processing devices 2704, such as one or more central processing units (CPUs), and/or one or more graphical processing units (GPUs), and so on.

The computing functionality 2702 can also include any storage resources 2706 for storing any kind of information, such as code, settings, data, etc. Without limitation, for instance, the storage resources 2706 may include any of: RAM of any type(s), ROM of any type(s), flash devices, hard disks, optical disks, and so on. More generally, any storage resource can use any technology for storing information. Further, any storage resource may provide volatile or non-volatile retention of information. Further, any storage resource may represent a fixed or removal component of the computing functionality 2702. The computing functionality 2702 may perform any of the functions described above when the processing devices 2704 carry out instructions stored in any storage resource or combination of storage resources.

As to terminology, any of the storage resources 2706, or any combination of the storage resources 2706, may be regarded as a computer readable medium. In many cases, a computer readable medium represents some form of physical and tangible entity. The term computer readable medium also encompasses propagated signals, e.g., transmitted or received via physical conduit and/or air or other wireless medium, etc. However, the specific terms "computer readable storage medium" and "computer readable medium device" expressly exclude propagated signals per se, while including all other forms of computer readable media.

The computing functionality 2702 also includes one or more drive mechanisms 2708 for interacting with any storage resource, such as a hard disk drive mechanism, an optical disk drive mechanism, and so on.

The computing functionality 2702 also includes an input/output module 2710 for receiving various inputs (via input devices 2712), and for providing various outputs (via output devices 2714). The input devices 2712 can include any of key entry devices, mouse entry devices, touch-enabled entry devices, voice entry devices, and so on. One particular output mechanism may include a presentation device 2716 and an associated graphical user interface (GUI) 2718. The computing functionality 2702 can also include one or more network interfaces 2720 for exchanging data with other devices via one or more networks 2722. One or more communication buses 2724 communicatively couple the above-described components together.

The network(s) 2722 can be implemented in any manner, e.g., by a local area network, a wide area network (e.g., the Internet), point-to-point connections, etc., or any combination thereof. The network(s) 2722 can include any combination of hardwired links, wireless links, routers, gateway functionality, name servers, etc., governed by any protocol or combination of protocols.

Alternatively, or in addition, any of the functions described in the preceding sections can be performed, at least in part, by one or more hardware logic components. For example, without limitation, the computing functionality 2702 can be implemented using one or more of: Field-programmable Gate Arrays (FPGAs); Application-specific Integrated Circuits (ASICs); Application-specific Standard Products (ASSPs); System-on-a-chip systems (SOCs); Complex Programmable Logic Devices (CPLDs), etc.

In closing, the functionality described above can employ various mechanisms to ensure the privacy of user data maintained by the functionality, in accordance with user expectations and applicable laws of relevant jurisdictions. For example, the functionality can allow a user to expressly opt in to (and then expressly opt out of) the provisions of the functionality. The functionality can also provide suitable security mechanisms to ensure the privacy of the user data (such as data-sanitizing mechanisms, encryption mechanisms, password-protection mechanisms, etc.).

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method, performed by one or more computing devices, for providing a digital virtual venue, comprising:
issuing physical-attendee (PA) tickets to a plurality of actual attendees, each PA ticket granting an actual attendee a right to physically attend an event in person, the event taking place at a physical venue;
issuing virtual-attendee (VA) tickets to a plurality of virtual attendees, each VA ticket granting a virtual attendee a right to virtually attend the event from a remote location with respect to the physical venue, via a digital virtual venue which is an extension of the physical venue;
each ticket, whether a PA ticket or a VA ticket, being associated with an actual position in the physical venue; and
providing a virtual reality experience to the virtual attendees during the event, enabling the virtual attendees to virtually attend the event,
during the event, each particular virtual attendee being considered as virtually present at a particular actual position in the physical venue, and
the particular actual position being specified by a particular VA ticket that has been granted to the particular virtual attendee.

2. The method of claim 1, further comprising generating a virtual section to accommodate a group of virtual attendees, the virtual section corresponding to a group actual positions within the physical venue at which the group of virtual attendees will virtually attend the event.

3. The method of claim 2, wherein said generating is performed in an on-demand manner, when an existing allocated space for accommodating actual attendees has reached a prescribed capacity-related threshold.

4. The method of claim 3, wherein the virtual section corresponds to a first virtual section, and wherein the method further comprises generating a second virtual section when a space for allocating virtual attendees in the first virtual section reaches a capacity-related threshold.

5. The method of claim 2, wherein said virtual section corresponds to a virtual duplication of a real counterpart section of the physical venue, specified by a core model associated with the physical venue.

6. The method of claim 5, wherein the virtual section is placed at a specified location with respect to the real counterpart section of the physical venue.

7. The method of claim 1, further comprising displaying a presence of a plurality of virtual attendees, to a plurality of actual attendees, via a display mechanism provided at the physical venue.

8. The method of claim 1, further comprising:
receiving behavior information that represents behavior of the particular virtual attendee, in response to interaction, by the particular virtual attendee, with a user computing device in a prescribed manner; and
providing the behavior information to at least one other attendee.

9. The method of claim 1, further comprising:
receiving behavior information that represents behavior of the particular virtual attendee, in response to a movement of the particular virtual attendee, as detected by at least one depth camera system; and
providing the behavior information to at least one other attendee.

10. The method of claim 1, further comprising:
using at least one video camera to capture a scene within the physical venue, the scene being associated with a real part and a virtual part,
the real part including at least one real object, and the virtual part including at least one virtual object; and
integrating said at least one actual object and said at least one virtual object, to produce at output result, for presentation to at least one recipient.

11. The method of claim 1, further comprising:
detecting collective behavior by a group of virtual attendees; and
providing an indication of the collective behavior using at least one output mechanism in the physical venue.

12. The method of claim 11, wherein said at least one output mechanism corresponds to a lighting mechanism that is used to provide lighting at the physical venue.

13. A virtual venue system, implemented by one or more computing devices, comprising:
logic configured to receive video information, from at least one video camera, which captures a scene within a physical venue, the scene encompassing at least one actual object;
logic configured to also receive sensor information provided by at least one sensor associated with the video camera, the sensor information describing at least a direction at which the video camera is pointed within the physical venue, and a position of the video camera within the physical venue;
logic configured to detect presence of at least one virtual object associated with the scene based on the sensor information, said at least one virtual object capturing an aspect of a virtual venue which is an extension of the physical venue; and
logic configured to integrate said at least one actual object and said at least one virtual object, to produce at output result,
the output result being presented to at least one recipient.

14. The virtual venue system of claim 13,
wherein said at least one video camera and said at least one sensor are associated with a computing device operated by an actual attendee who is attending the physical venue, and
wherein the virtual venue system further comprises logic for displaying the output result to the actual attendee, who corresponds to said at least one recipient.

15. The virtual venue system of claim 13,
wherein the output result corresponds to broadcast information, and
wherein the virtual venue system further comprises a broadcasting module configured to deliver the broadcast information to said at least one recipient.
